# EUROPEAN PATENT SPECIFICATION

(11) **EP 4 249 309 B1**
(45) Date of publication and mention of the grant of the patent: **19.08.2026**
(21) Application number: 23161091.6
(22) Date of filing: 10.03.2023
(51) Int. Cl.: B60L 3/10, B60L 3/12, B60L 50/40, B60L 50/75, B60L 7/02, B60L 7/10, B60L 7/22, B60L 7/26, B60L 50/60, B60L 50/50

(54) **ENERGY MANAGEMENT SYSTEM**
ENERGIEVERWALTUNGSSYSTEM
SYSTÈME DE GESTION D'ÉNERGIE

(30) Priority: 17.03.2022 US 202263320946 P; 08.02.2023 US 202318107216
(43) Date of publication of application: 27.09.2023
(73) Proprietor: Transportation IP Holdings, LLC, Norwalk, CT 06851 (US)
(72) Inventor: WRIGHT, Gregory, Norwalk, CT, 06851 (US)
(74) Representative: Novagraaf Group

(56) References cited:
- WO-A1-2014/045825
- SE-C2- 531 113
- US-A1- 2006 046 895
- US-A1- 2020 365 951
- US-B2- 7 185 591

## Description

### CROSS-REFERENCE TO REEATED APPEICATIONS

This application claims priority to U.S. Provisional Application No. 63/320,946, filed on March 17, 2022.

### BACKGROUND

### Technical Field.

The disclosure relates to systems and methods for energy management of vehicles and vehicle systems.

### Discussion of Art.

Some current energy assemblies on vehicles or vehicle systems may have difficulty capturing the energy created during an energy creation event, such as a braking event in a regenerative braking system. During a stopping event of the vehicle, there is a potential to charge an energy assembly. This charge may be used to assist with power output events of the vehicle, such as acceleration events. However, at present, energy assemblies on vehicles may have difficulty capturing and storing energy at a sufficiently high-power charge rate. It may be desirable to have a system and method that differs from those that are currently available. US7185591B2 discloses a system and method for retrofitting a propulsion circuit of an existing Off Highway Vehicle. US2006046895A1 discloses a vehicular control system for regenerative braking. WO2014045825A1 discloses a dumptruck that can properly control a plurality of travel controls.

### BRIEF DESCRIPTION

According to an aspect of the invention, there is provided a system and a method according to the appended claims. In accordance with one example or aspect, a system is provided that may include a controller, a first energy assembly, and a second energy assembly. The controller may control conduction of generated electric current from one or more traction motors of a vehicle to the first energy assembly and the second energy assembly. The controller may control the conduction of the generated electric current based at least in part on a measured or estimated value for a rate, an amount, or both a rate and an amount at which the generated electric current may be generated by the one or more traction motors. The controller may direct a first portion of the generated electric current to the second energy assembly and a second portion of the generated electric current to the first energy assembly based on the measured or estimated value for the rate, the amount, or both the rate and the amount at which the generated electric current may be generated by the one or more traction motors.

In accordance with one example or aspect, a system is provided that may include a controller, a first energy assembly, and a second energy assembly. The controller may control conduction of a powering electric current selectively from the first energy assembly and the second energy assembly of a vehicle to one or more traction motors of the vehicle. The controller may direct the powering electric current to the one or more traction motors from the first energy assembly prior to direction the powering electric current to the one or more traction motors from the second energy assembly responsive at least in part to a demand of the one or more traction motors exceeding a demand threshold. The controller may direct the powering electric current to the one or more traction motors from the second energy assembly prior to directing the powering electric current to the one or more traction motors from the first energy assembly responsive at least in part to a demand of the one or more traction motors not exceeding the demand threshold.

In accordance with one example or aspect, a method is provided that may include determining a rate at which electric current may be generated by one or more traction motors of a vehicle. The method may include directing a first portion of the electric current that may be generated by the one or more traction motors to a second energy assembly. The method may include directing a second portion of the generated electric current to a first energy assembly of the vehicle responsive at least in part to the determined rate.

### BRIEF DESCRIPTION OF THE DRAWINGS

Hereafter "embodiment(s)" refer to embodiment(s) of the disclosure. The invention is defined in the appended claims. The subject matter may be understood from reading the following description of non-limiting embodiments, with reference to the attached drawings, wherein below:
FIG. 1 shows a schematic overview of one example of an energy management system;
FIG. 2 shows another schematic overview of one example of an energy management system;
FIG. 3 shows an energy management method, according to one example; and
FIG. 4 shows an energy management method, according to one example.

### DETAILED DESCRIPTION

Examples of the subject matter described herein may relate to systems and methods for energy management of vehicles and vehicle systems. The vehicles or vehicle systems may include energy assemblies, such as one or more battery assemblies (e.g., battery cells, battery modules, etc.), capacitors, fuel cells, or the like, that can store and discharge energy, convert electric energy from another form (e.g., a chemical form), etc. At least one of the energy assemblies may be capable of high-power energy storage. For example, a high-power energy assembly may be able to store more energy, may be able to receive current at greater powers or wattages, and/or may be able to discharge current at relatively greater powers or wattages than a low or lower power energy assembly. In one example, a capacitor or a supercapacitor may be a high-power energy assembly and a battery cell or battery assembly may be a low or lower power energy assembly.

During quick energy charging events, such as sudden braking, there may be high power flowing into the vehicle which may be relatively more difficult to capture using a low-power energy storage assembly, such as a battery assembly. For example, during braking of a vehicle having traction motors, the motors may generate current via dynamic or regenerative braking. If the braking is sudden, then the motors may suddenly output a significant amount of electric current. This sudden amount of significant current may be more current than battery cells can handle. The use of a high-power storage device may allow for greater capture of energy during such quick charging events.

The energy stored in the high-power storage device may then be discharged during quick energy discharging events, such as acceleration events. The high-power storage devices may be smaller than low-power storage devices, such as battery systems. This may allow more space on the vehicle for other energy sources, such as fuel cells and/or fuel storage. The fuel cells may be capable of taking a fuel (such as hydrogen) and converting or extracting the chemical energy stored in the fuel to electric energy to power the vehicle. For example, in one embodiment, a fuel cell may be an energy storage device in that the fuel cell stores chemical energy in the fuel, converts, and discharges at least some of this chemically stored energy as electric energy (e.g., current).

The vehicle could have a small amount of battery systems in addition to the fuel cell as the main power source. The vehicle may have the high-power energy storage device to capture the high energy during charging or braking events. The battery system may provide a buffer between power loads for the fuel cell to optimize its operation.

The vehicle may include a high energy storage device and a high-power storage device. During a trip, the high-power storage device may capture braking and charging energy due to the high-power nature. The high-power storage device may be charged via the onboard high-energy storage device. The charged high-power storage device may then be used to dissipate a large amount of power during peak power demands, such as acceleration events. This may save the high-energy storage device from high power loads which may reduce the life of the system. Forecasted trip plans and knowledge of when high acceleration events may occur may enhance the strategy of when the high energy storage device charges up the high-power storage device. Additionally, having different types of energy storage devices associated with the vehicle, such as the high-power storage device and a low power storage device, may allow the energy storage devices to achieve different functions. For example, one energy storage device may be able to discharge faster while the other energy storage device may be able to discharge for a longer period of time.

The use of different types of energy storage devices may be suitable in a variety of use cases. For example, when there is a sudden input supply of current, such as a sudden braking event, the initial portion of the current may be directed to the high-power energy storage device. The high-power energy storage device may be able to accept this sudden supply of current. When the high-power energy storage device may be fully charged or may be charged above a predetermined threshold, at least a portion of the remaining the current may be directed to a low or lower power device or devices. This may allow the remaining or excess current to at least partially charge the lower power energy device or devices.

In one example, there may be a sudden increase in load required, such as in a sudden acceleration event. When a sudden increase in load may be required, the high-power energy device may provide at least an initial portion of the demanded current from power stored in the high-power energy device. In the event the high-power energy device may be depleted or may have a stored energy below a predetermined threshold and may be unable to supply the initial portion of the demanded current, the remaining power demanded can be received from the low or lower power energy device or devices.

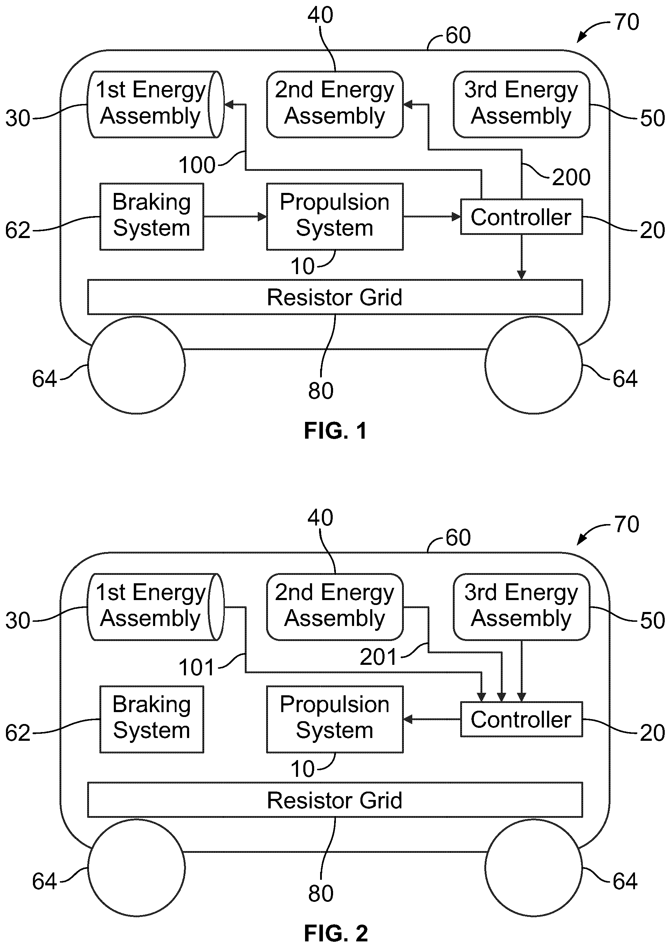

Fig. 1 illustrates one embodiment of an energy management system 70. The energy management system may include a controller 30 that may operate or control operation of components of a vehicle 60 to manage how electric energy may be captured, supplied, and/or stored. The controller may represent hardware circuitry that may include and/or may be connected with one or more processors (e.g., one or more integrated circuits, field programmable gate arrays, microprocessors, etc.) that may perform the operations described herein in connection with the controller. The controller may be onboard or off-board the vehicle.

The vehicle may include a propulsion system 10 that may operate to move or propel the vehicle and a braking system 62 that may operate to slow or stop movement of the vehicle. One or more components of the propulsion system may operate to slow or stop movement of the vehicle, as described herein. The propulsion system may represent one or more traction motors that rotate wheels 64 or otherwise operate to propel the vehicle while being powered by electric current. The propulsion system optionally may include an engine and/or alternator or generator. The propulsion system can represent one or more engines, motors, transmissions, propellers, or the like, that generate propulsion to move the vehicle. The braking system can represent one or more brakes, such as air brakes, friction brakes, hydraulic brakes, or the like. The motor(s) of the propulsion system may operate to slow or stop movement of the vehicle using dynamic or regenerative braking, which may create electric current. The controller can communicate control signals with the propulsion system and/or the brake system to control or change movement of the vehicle.

The vehicle as described herein may extend to multiple types of vehicle systems. These vehicle types may include automobiles, trucks (with or without trailers), buses, marine vessels, aircraft, mining vehicles, agricultural vehicles, or other off-highway vehicles. A vehicle system may include a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together as a group. Vehicle groups may be referred to as a convoy, consist, swarm, fleet, platoon, and train.

The vehicle and/or the energy management system may include one or more different types of energy assemblies 30, 40, 50 that may store, supply, and/or generate electric current. For example, the energy assemblies may store electric energy received from regenerative or dynamic braking from the traction motors. As another example, the energy assemblies may store energy in a chemical form, such as fuel. The energy assemblies may convert the chemical energy in the fuel to electrical energy to power the vehicle. As another example, the energy assemblies may store electric energy received from an engine. The engine may move to cause an alternator or generator to generate electric current that may be storable in the energy assemblies. As used herein, the terms alternator and generator both refer to a device for converting mechanical energy, such as produced by an output shaft of an engine, to electrical energy. The traction motors may be supplied with electric current from a controllable source of electric power, such as from the first and/or second energy assemblies. The traction motors may be powered to propel the vehicle using the electric current received from the first and/or second energy assemblies. While three energy assemblies are shown, the management system or vehicle may include two energy assemblies or more than three energy assemblies.

The first energy assembly may be an assembly that can store more energy than the second energy assembly, but may be more limited (relative to the second energy assembly) in terms of the rate at which the first energy assembly may be charged with and/or discharge energy, and/or in terms of the number of charging cycles (before the first energy assembly reaches an unacceptable state or condition, or shows unacceptable decreased functionality). Conversely, the second energy assembly may store less energy than the first energy assembly, but may be able to receive and/or discharge energy at faster rates and/or greater amounts of power, and/or be able to experience a greater number of charging cycles (before the second energy assembly reaches an unacceptable state or condition, or shows unacceptable decreased functionality). For example, the first energy assembly may charge and/or discharge at slower rates, and/or may not be able to go through as many charging cycles as the second energy assembly. The third energy assembly may not store energy, but may only create energy. Examples of the first energy assembly may include one or more battery cells, battery packs, battery stacks, battery modules, one or more fuel cells, or the like. One or more fuel cells may be an energy assembly in that the fuel cells may be able to extract and/or convert energy (such as chemical energy) stored in a fuel (such as hydrogen) to electric energy to power the vehicle. Examples of the second energy assembly may include capacitors, such as a double layered capacitor, a super capacitor, or another type of energy storage device. The third energy assembly may be a fuel cell, alternator, generator, solar panel, energy harvester device, or the like. Alternatively, the first and second energy assemblies may be the same type or model of devices, but the first energy device may be slower to charge and/or discharge, may have a greater storage capacity, and/or may be more limited in the number of charging and discharging cycles that the first energy assembly may perform relative to the second energy assembly.

With regard to fuel of the fuel cell that is used as the third energy assembly, the fuel may be a single fuel type in one embodiment and in other embodiments the fuel may be a mixture of a plurality of different fuels. In one example of a fuel mixture, a first fuel may be liquid and a second fuel may be gaseous. A suitable liquid fuel may be diesel (regular, biodiesel, hydrogen-derived renewable diesel or "HDRD", and the like), gasoline, kerosene, dimethyl ether (DME), alcohol, and the like. A suitable gaseous fuel may be natural gas (methane) or a short chain hydrocarbon, hydrogen, ammonia, and the like. In one embodiment, fuel may be inclusive of stored energy as used herein. In that perspective, a battery state of charge, or a source of compressed gas, a flywheel, fuel cell, and other types of non-traditional fuel sources may be included.

The controller may control conduction of the electric current between the energy assemblies and the traction motors. For example, the controller may control operation of the motors, the energy assemblies, circuitry (e.g., switches) between the motors and energy assemblies, etc., during different operating modes to control conduction of electric current from the energy assemblies to the motors, and/or from the motors to the energy assemblies, based on the operating mode and one or more operating parameters.

The electric current may be stored in the energy assemblies or may be directed to a resistor grid 80. The resistor grid may convert the current to thermal energy that may be dissipated to the atmosphere. If the resistor grids are above a threshold temperature, additional energy may not be routed to the grids, as the increase in temperature may cause degradation of the grids. Thus, the capacity of the system may be determined by monitoring energy assemblies' states of charge, electrical system demand, and/or grid temperature.

The motors may generate current from dynamic or regenerative braking, or in a dynamic braking mode of operation. During such operation, the traction motors may serve as axle-driven electrical generators. At least some of the energy recovered during braking may be stored in the first and/or second energy assemblies. A charging mode of operation may be shown schematically in Fig. 1. The controller may control when and/or how much electric current may be directed from the motors to the first and/or second energy assembly based on one or more operational parameters described herein. The controller may control conduction of the electric current based on an amount at which the electric current may be generated by the traction motors. The controller may control the conduction of the electric current based in part on a measured or estimated value for rate at which the electric current may be generated by the traction motors. The estimated value for the rate of electric current generated may be based on the one or more operational parameters. The operational parameters may include: the braking rate or power, the state or condition of the energy assemblies, forecasted energy creation for a portion of a trip, and the like. Energy creation forecasts may be based on a calculated, estimated or known mass of a vehicle, the vehicle speed, the grade of track, a stopping distance, traction motor rating, number of traction motors, and the like. In one embodiment, the operational parameter may relate to a conversion capability of AC to DC by power electronics associated with the vehicle, and/or the capacity of a DC-DC converter, and/or by a capability of a DC bus. Examples of different operational parameters may be described herein.

The vehicle may have a sudden stop event in which a strong braking force may be applied, and the traction motors may generate current at a rate that exceeds a threshold. The threshold may be determined by the rate at which the first energy assembly can receive current in order to store energy. When the rate of the current may exceed the threshold, the controller may direct current to the second energy assembly to store this energy. The second energy assembly may accept greater rates of current than the first energy assembly, and thus may be better suited for receiving current exceeding the threshold. The current may be sent to the second energy assembly until the rate decreases below the threshold, until the storage capacity of the second energy assembly may be reached, until a threshold amount of capacity of the second energy assembly may be reached, or the like. The remaining current then may be directed to the first energy assembly, the resistor grid, or a combination of both.

The vehicle may have a gradual braking force such that the traction motor generates current at a rate that does not exceed the threshold. Where the current does not exceed the threshold, the controller may direct current to the first assembly which is capable of receiving the entirety of the current. The controller may direct the current to the first energy assembly until the rate increases above the threshold, until the storage capacity of the first energy assembly may be reached, until a threshold amount of capacity of the first energy assembly may be reached, or the like. The remaining current then may be directed to the second energy assembly, the resistor grid, to ground (through steel wheels and into the steel rails, e.g.), or a combination of the foregoing.

The vehicle may have a sudden stop event in which a strong braking force may be required, the traction motor may generate an amount of current that may exceed a determined threshold value. The threshold may be determined, at least in part, by the amount of current that the first energy assembly can receive to store energy. When the amount of the current exceeds the threshold, the controller may direct current to the second energy assembly to store this energy. The second energy assembly may accept greater amounts of current than the first energy assembly, and thus may be better suited for receiving current exceeding the threshold. The current may be sent to the second energy assembly until the amount decreases below the threshold, until the storage capacity of the second energy assembly may be reached, until a threshold amount of capacity of the second energy assembly may be reached, or the like. The remaining current then may be directed to the first energy assembly, the resistor grid, or a combination of both.

The vehicle may have a gradual braking force such that an amount of current generated may not exceed the threshold. Where the current does not exceed the threshold, the controller may direct current to the first energy assembly which may receive the entirety of the current. The controller may direct the current to the first energy assembly until the amount increases above the threshold, until the storage capacity of the first energy assembly may be reached, until a threshold amount of capacity of the first energy assembly may be reached, or the like. The remaining current then may be directed to the second energy assembly, the resistor grid, or a combination of both.

The controller may direct current in the charging mode based on the state or condition of the energy assemblies. When the state of the first energy assembly may be good, the controller may first direct current to the first energy assembly. When the state of the first energy assembly may be deteriorated, the controller may first direct current to the second energy assembly. The state or condition of the first energy assembly may be evaluated given the age of the energy assembly, the number of charging cycles executed by the energy assembly, the internal or external temperature of the energy assembly, whether the energy assembly may be operating as expected, a combination of these characteristics or other characteristics. For example, the state of the first energy assembly may be deemed to be deteriorated based on an age being longer than a threshold age, the first energy assembly having a maximum state of charge that may be less than a threshold capacity, and/or the first energy assembly may not be operating as expected. When the first energy assembly may be in a deteriorated state, the controller may direct current to the second energy assembly until the second energy assembly may be fully charged. The first energy assembly may be in a state of full deterioration in which the first energy assembly may be unable to store any additional energy. In this case, no current may be directed to the first energy assembly. The first energy assembly may be in a state of partial deterioration, in which the first energy may still be able to store energy, but at a lesser amount or rate than when the first energy assembly may be in a good state. In a partial deterioration state, the first energy assembly may still receive current, but only after the second energy assembly may have received a first portion of the current.

The state or condition the first energy assembly may be deemed good where the battery cells of the first energy assembly are relatively new, the number of charging cycles is low, and the maximum state of charge of the first energy assembly may be greater than the threshold capacity. When the state of the first energy assembly may be deemed good, the controller may direct current to the first energy assembly until the first energy assembly may be fully charged. Once the first energy assembly may be fully charged, the controller may then direct excess current to the second energy assembly, the third energy assembly, or a combination of both.

In one embodiment, the controller may direct current based on a state of charge of the first energy assembly and the second energy assembly. In one embodiment, when the charge of the first energy assembly may be below a first threshold and the charge of the second energy assembly may be above a first threshold, the controller may direct current to the first energy assembly. For example, where the first energy assembly may have a low charge and the second energy assembly may be fully charged, the current may be directed to the first energy assembly to charge the first energy assembly. In one embodiment, the charge of the first energy assembly may be above a first threshold and the charge of the second energy assembly may be below a first threshold, the controller may direct current to the second energy assembly. For example, where the first energy assembly may be fully charged and the second energy assembly may have a low charge, the current may be directed to the second energy assembly to charge the second energy assembly. In one embodiment, the charge of the first energy assembly may be below a first threshold and the charge of the second energy assembly may be below a first threshold, the controller may direct current first to the second energy assembly to charge the second energy assembly above the first threshold, then the controller may direct current to the first energy assembly to charge the first energy assembly above the first threshold. In one embodiment, the charge of the first energy assembly may be above a first threshold and the charge of the second energy assembly may be above a first threshold, the controller may direct current to the third energy assembly. For example, where both the first energy assembly and the second energy assembly are sufficiently charged, the controller may direct the remaining current to the third energy assembly.

The controller may direct current to the first energy assembly and the second energy assembly based on a forecasted energy creation for an upcoming portion of a trip of the vehicle. For example, based on the trip plan, there may be a portion of the trip where energy creation may be expected to peak. Based on this peak of energy creation, the controller may direct the first portion of the charging current to the second energy assembly, as the peak energy creation rate may exceed the threshold that the first energy assembly can receive. In one embodiment, the forecasted energy creation for a portion of the trip may be at or below the threshold current that the first energy assembly may be able to receive. In this case, the controller may direct the current to the first energy assembly where the forecasted energy creation may be at or below the threshold.

In one example, the controller may modify directing the current to the first energy assembly and the second energy assembly based on detecting one or more of a wheel slip event or a wheel slide event. There are conditions where the rotational speed of a vehicle's wheels may differ from that associated with 'rolling contact' between the wheel and the route. In common parlance, if the periphery of a wheel moves faster than the speed of the vehicle, as during hard acceleration, the condition is known as wheel-spin or wheel-slip, and if the periphery of the wheel moves slower than the speed of the vehicle, as during hard braking, the condition is known as wheel-slide, or in the extreme, locked wheels. Wheel slip or wheel slide may occur as the result of route conditions, wheel conditions, weather, debris, or the like. Wheel slip may result in decreased coefficients of friction between the wheels and the route. A wheel slip or a wheel slide event may result in a large influx of power to the traction motor. The first energy assembly may not be able to accept the large influx, however, the second energy assembly may be able to accept the large influx resulting from the wheel slip or the wheel slide. The controller may direct the current based on the wheel slip event or the wheel slide event in view of the forecasted energy creation for the upcoming portion of the trip of the vehicle.

In a discharging mode of operation, the controller may control when and/or how much electric current may be directed from the first, second, and/or third energy assembly to the motor(s) based on one or more of the operational parameters. For example, the controller may direct current to the one or more traction motors from the second energy assembly responsive to a load or demand of the traction motors increasing (e.g., when the load or demand exceeds a demand threshold value). If the demand or load exceeds the threshold, then the controller may initially direct current from the second energy assembly and then subsequently direct current from the first energy assembly to the motor(s). The second energy assembly may discharge current faster or more rapidly than the first energy assembly, but for a shorter period of time. This may allow the controller to utilize the high-power output capabilities of the second energy assembly for situations such as sudden acceleration events, where additional or high-power output is needed for a brief period of time. Once this initial surge or demand may be met (entirely or partially) by the current from the second energy assembly, the controller may switch to directing energy to the motors from the first energy assembly. This may allow the motors to be initially powered by the second energy assembly during acceleration (where the second energy assembly may rapidly discharge stored energy) and then the motors to be powered using energy from the first energy assembly (where the first energy assembly may supply current over a longer period of time than the second energy assembly) or the third energy assembly.

The controller may initially power the one or more traction motors with powering electric current from the first energy assembly when the demand of the one or more traction motors does not exceed the demand threshold value. This may include events where relatively low-power output is needed, and thus the first energy assembly may be better suited to provide the relatively low-power output rather than the second energy assembly or the third energy assembly.

In one embodiment, the controller may direct current in the discharging mode based on the state or condition of the energy assemblies. When the state of the first energy assembly may be good, the controller may direct a first portion of the energizing current to the traction motor from the first energy assembly. When the state of the first energy assembly may be deteriorated, the controller may direct the first portion of the current to the traction motor from the second energy assembly or the third energy assembly. The state or condition of the first energy assembly may be evaluated given the age of the energy assembly, the number of charging cycles executed by the energy assembly, the internal or external temperature of the energy assembly, whether the energy assembly may be operating as expected, a combination of these characteristics or other characteristics. For example, the state of the first energy assembly may be deemed to be deteriorated based on an age being longer than a threshold age, the first energy assembly has a maximum state of charge that may be less than a threshold capacity, and/or the first energy assembly may not be operating as expected. When the first energy assembly may be in a deteriorated state, the controller may direct current to the traction motor from the second energy assembly or the third energy assembly.

The controller may direct current to the traction motors from the first energy assembly and the second energy assembly based on a forecasted energy demand for an upcoming portion of a trip of the vehicle. For example, based on the trip plan, there may be a portion of the trip where energy demand may be expected to peak. Based on the peak energy demand, the controller may direct the first portion of the powering current from the second energy assembly, as the peak energy demand rate may exceed the threshold that the first energy assembly may provide on its own. The controller may supplement the required demand with a second portion of powering current from the first energy assembly. In one embodiment, the forecasted energy demand for a portion of the trip may be at or below the threshold current that the first energy assembly may be able to provide. In this case, the controller may direct the current to the traction motor from the first energy assembly where the forecasted energy demand is at or below the threshold.

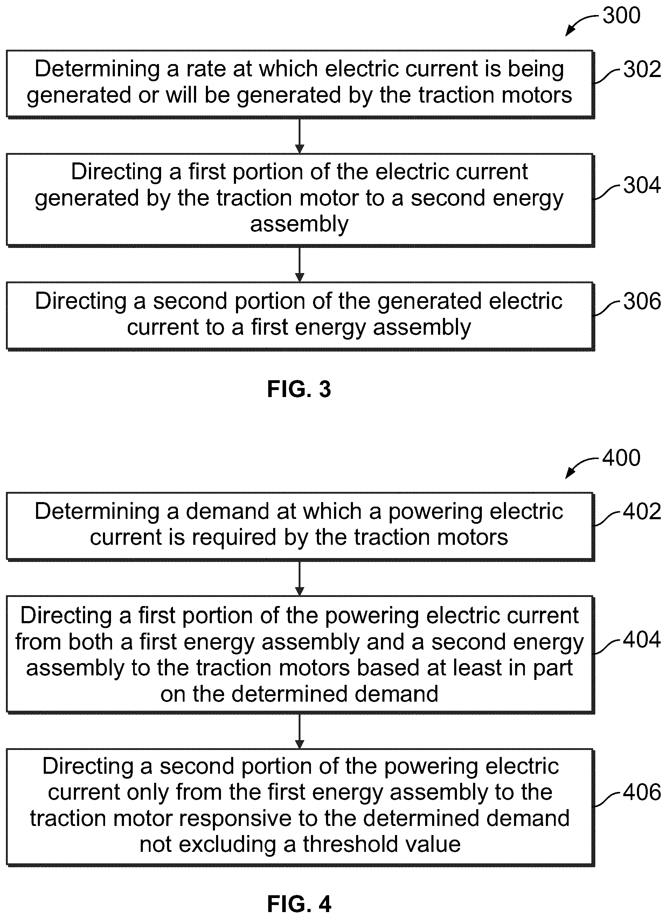

Fig. 3 illustrates a flowchart of one example of an energy management method 300. The energy management method shown in Fig. 3 may be related to a charging mode. The method may represent operations performed by the controller of the energy management system. At step 302, a rate may be determined at which electric current is being generated or will be generated by the traction motors. The rate may be determined based on a trip plan, a forecasted energy creation for a trip, a breaking event such as a sudden braking event, or the like.

At step 304, a first portion of the electric current generated by the traction motor may be directed to the second energy assembly. The first portion of the current may have higher energy that may be better suited for capture by the second energy assembly. The first energy assembly may not be capable of fully capturing and storing the first portion of the current.

At step 306, a second portion of the generated electric current may be directed to the first energy assembly. The second portion of the current may be capable of being fully captured and stored by the first energy assembly. This method of directing a first portion of the charging current to the second energy assembly and directing a second portion of the charging current to the first energy assembly may help increase the energy capture and storage of the energy management system.

Fig. 4 illustrates a flowchart of one example of an energy management method 400. The energy management method shown in Fig. 4 may be related to a discharging mode or a motoring mode. The method may represent operations performed by the controller of the energy management system. At step 402, a demand may be determined at which a powering electric current may be required by the traction motors. The demand may be determined based on a trip plan, a forecasted energy demand for a trip, an acceleration event, or the like.

At step 404, a first portion of the powering electric current from both a first energy assembly and a second energy assembly may be directed to the traction motors based at least in part on the determined demand. The first portion of the powering current may be required from both the energy assemblies where the power needed may be relatively high, and either energy assembly individually would not be capable of meeting the demand. This may occur where there may be a sudden acceleration event that requires high energy to be transferred to the traction motors.

At step 406, a second portion of the powering electric current only from the first energy assembly may be directed to the traction motors responsive to the determined demand not exceeding a threshold value. The threshold value may be determined based on the energy that can be provided by the first energy assembly individually. If the demand does not exceed the threshold value, the first energy assembly may be capable of providing the entirety of the demand. This may occur during gradual acceleration events, where the energy demand may be relatively low and capable of being provided by one energy assembly. Where the energy demand exceeds the threshold value, the second energy assembly may supply the energy demanded that may be above the threshold value.

In one embodiment, the controllers or systems described herein may have a local data collection system deployed and may use machine learning to enable derivation-based learning outcomes. The controllers may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like.

In one embodiment, the controllers may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one embodiment, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

In one embodiment, a system may include a controller, a first energy assembly, and a second energy assembly. The controller may control conduction of generated electric current from one or more traction motors of a vehicle to the first energy assembly and the second energy assembly. The controller may control the conduction of the generated electric current based at least in part on a measured or estimated value for a rate, an amount, or both a rate and an amount at which the generated electric current may be generated by the one or more traction motors. The controller may direct a first portion of the generated electric current to the second energy assembly and a second portion of the generated electric current to the first energy assembly based on the measured or estimated value for the rate, the amount, or both the rate and the amount at which the generated electric current may be generated by the one or more traction motors.

In one example, the controller may control conduction of the generated electric current output from the one or more traction motors during braking of the vehicle to one or more of the first energy assembly, the second energy assembly, or a third energy assembly of the vehicle based on a state of health of one or more of the first energy assembly, the second energy assembly, or the third energy assembly. The controller may further provide a notification responsive to the state of health of the one or more energy assemblies reaching a predetermined value indicative of decline in performance. The controller may control conduction of the generated electric current output from the one or more traction motors during braking of the vehicle to one or more of the second energy assembly or the third energy assembly responsive to the state of health of the first energy assembly reaching the predetermined value indicative of decline in performance.

In one example, the controller may control conduction of the generated electric current that may be generated by the one or more traction motors during braking of the vehicle to one or more of the first energy assembly, the second energy assembly, or a third energy assembly of the vehicle based on a state of charge of the first energy assembly or the second energy assembly. The controller may control conduction of the generated electric current into of one or more of the first energy assembly or the second energy assembly based on a forecasted energy creation for an upcoming portion of a trip of the vehicle.

The controller may control conduction of the generated electric current into of one or more of the first energy assembly or the second energy assembly responsive to detecting one or more of a wheel slip event or a wheel slide event based on a forecasted energy creation for an upcoming portion of a trip of the vehicle. The controller may control conduction of the generated electric current into of one or more of the first energy assembly or the second energy assembly based on a forecasted energy demand for an upcoming portion of a trip of the vehicle.

In one embodiment, a system may include a controller, a first energy assembly, and a second energy assembly. The controller may control conduction of a powering electric current selectively from the first energy assembly and the second energy assembly of a vehicle to one or more traction motors of the vehicle. The controller may direct the powering electric current to the one or more traction motors from the first energy assembly prior to direction the powering electric current to the one or more traction motors from the second energy assembly responsive at least in part to a demand of the one or more traction motors exceeding a demand threshold. The controller may direct the powering electric current to the one or more traction motors from the second energy assembly prior to directing the powering electric current to the one or more traction motors from the first energy assembly responsive at least in part to a demand of the one or more traction motors not exceeding the demand threshold.

In one example, the controller may control conduction of the powering electric current out of one or more of the first energy assembly or the second energy assembly to the one or more traction motors during an acceleration event based on an activation speed of a third energy assembly. The activation speed may be indicative of a time delay before the third energy assembly may be operational to provide at least part of the powering electric current. The controller may control conduction of the powering electric current out of one or more of the first energy assembly or the second energy assembly based on a forecasted energy demand for an upcoming portion of a trip of the vehicle. The controller may control conduction of the powering electric current out of a third energy assembly based on an energy storage state of one or more of the first energy assembly or the second energy assembly.

In one embodiment, a method may include determining a rate at which electric current may be generated by one or more traction motors of a vehicle. The method may include directing a first portion of the electric current that may be generated by the one or more traction motors to a second energy assembly. The method may include directing a second portion of the generated electric current to a first energy assembly of the vehicle responsive at least in part to the determined rate.

In one example, the method may include directing the electric current generated by the one or more traction motors during braking of the vehicle to one or more of the first energy assembly, the second energy assembly, or a third energy assembly of the vehicle based on a state of health of one or more of the first energy assembly, the second energy assembly, or the third energy assembly. The method may include directing the electric current generated by the one or more traction motors during braking of the vehicle to one or more of the first energy assembly, the second energy assembly, or a third energy assembly of the vehicle based on a state of charge of the first energy assembly or the second energy assembly. The method may include providing a notification responsive to the state of health of the one or more energy assemblies reaching a predetermined value indicative of decline in performance.

In one example, the method may include directing the electric current generated by the one or more traction motors during the braking of the vehicle to the second energy assembly responsive to the state of health of the first energy assembly reaching a predetermined value indicative of decline in performance. The method may include directing the electric current into of one or more of the first energy assembly or the second energy assembly based on a forecasted energy creation for an upcoming portion of a trip of the vehicle. The method may include directing the electric current generated into of one or more of the first energy assembly or the second energy assembly responsive to detecting one or more of a wheel slip event or a wheel slide event based on a forecasted energy creation for an upcoming portion of a trip of the vehicle. The method may include directing the electric current directed into of one or more of the first energy assembly or the second energy assembly based on a forecasted energy demand for an upcoming portion of a trip of the vehicle.

In accordance with one example or aspect, a method may be provided that may include determining a demand at which a powering electric current may be required by one or more traction motors of a vehicle. The method may include directing a first portion of the powering electric current from both a first energy assembly and a second energy assembly to the one or more traction motors based at least in part on the determined demand. The method may include directing a second portion of the powering electric current from only the first energy assembly to the one or more traction motors responsive to the determined demand not exceeding a demand threshold.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

The above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments.

## Claims

1. A system (70) comprising:
a controller (20) that is configured to control conduction of generated electric current from one or more traction motors (10) of a vehicle (50) to both of a capacitor (40) and a battery, (30) the controller is configured to control the conduction of the generated electric current based at least in part on a measured or estimated value for a rate, an amount, or both a rate and an amount, of which the generated electric current is generated by the one or more traction motors,
the controller is further configured to direct a first portion of the generated electric current to the battery and a second portion of the generated electric current to the capacitor based on the measured or estimated value for the rate, the amount, or both the rate and the amount at which the generated electric current is generated by the one or more traction motors,
**characterized in that**:
the controller is further configured to control conduction of the generated electric current into the capacitor instead of the battery responsive to detecting one or more of a wheel slip event or a wheel slide event.

2. The system of claim 1, wherein the controller (20) is configured to control conduction of the generated electric current output from the one or more traction motors during braking of the vehicle to one or more of the battery (30) or the capacitor (40) of the vehicle based on a state of health of a fuel cell (50) of the vehicle that also powers the one or more traction motors.

3. The system of claim 2, wherein the controller is further configured provide a notification responsive to the state of health of one or more of the battery, (30) the capacitor, (40) the fuel cell (50) reaching a predetermined value indicative of decline in performance.

4. The system of claim 3, wherein the controller is configured to control conduction of the generated electric current output from the one or more traction motors during braking of the vehicle to the capacitor (40) responsive to the state of health of the battery (30) reaching the predetermined value indicative of decline in performance.

5. The system of claim 1, wherein the controller is further configured to control conduction of the generated electric current that is generated by the one or more traction motors during braking of the vehicle to one or more of the battery (30) or the capacitor (40) of the vehicle based on a state of charge of the battery or the capacitor.

6. The system of claim 1, wherein the controller is further configured to control conduction of the generated electric current into of one or more of the battery (30) or the capacitor (40) based on a forecasted energy creation for an upcoming portion of a trip of the vehicle.

7. The system of claim 1, wherein the controller is further configured to control conduction of the generated electric current into the capacitor responsive to detecting the one or more of the wheel slip event or the wheel slide event and based on a forecasted energy creation for an upcoming portion of a trip of the vehicle.

8. The system of claim 1, wherein the controller is further configured to control conduction of the generated electric current into of one or more of the battery (30) or the capacitor (40) based on a forecasted energy demand for an upcoming portion of a trip of the vehicle.

9. The system of claim 1, wherein:
the controller is configured to control conduction of powering electric current selectively from the battery (30) as a first energy assembly and the capacitor (40) as a second energy assembly of the vehicle to one or more traction motors of the vehicle, the controller configured to direct the powering electric current to the one or more traction motors from the first energy assembly prior to directing the powering electric current to the one or more traction motors from the second energy assembly responsive at least in part to a demand of the one or more traction motors exceeding a demand threshold,
the controller is configured to direct the powering electric current to the one or more traction motors from the second energy assembly prior to directing the powering electric current to the one or more traction motors from the first energy assembly responsive at least in part to a demand of the one or more traction motors not exceeding the demand threshold, and
the controller is configured to control conduction of the powering electric current out of one or more of the first energy assembly or the second energy assembly to the one or more traction motors during an acceleration event based on an activation speed of a third energy assembly, (50) the activation speed indicative of a time delay before the third energy assembly (50) is operational to provide at least part of the powering electric current.

10. The system of claim 9, wherein the controller is configured to control conduction of the powering electric current out of one or more of the first energy assembly (30) or the second energy assembly (40) to the one or more traction motors during the acceleration event based on the activation speed of the third energy assembly (50) being slower than discharge speeds of the battery and the capacitor, the activation speed of the third energy assembly indicative of the time delay before the third energy assembly is operational to provide at least part of the powering electric current.

11. The system of claim 9, wherein the controller is configured to control conduction of the powering electric current out of one or more of the first energy assembly (30) or the second energy assembly (40) based on a forecasted energy demand for an upcoming portion of a trip of the vehicle.

12. The system of claim 9, wherein the controller is configured to control conduction of the powering electric current out of the third energy assembly (50) based on an energy storage state of one or more of the first energy assembly or the second energy assembly.

13. The system of any one of claims 9 to 12, wherein the third energy assembly (50) is a fuel cell.

14. A method (300) of operating the system of any one of claims 1 to 12, the method comprising:
determining a rate at which electric current is being generated or will be generated by one or more traction motors of a vehicle that are powered by the battery, the capacitor, and a fuel cell; (302)
directing a first portion of the electric current generated by the one or more traction motors to the capacitor and directing a second portion of the generated electric current to the battery of the vehicle responsive at least in part to the determined rate; (304,306) and
directing the electric current generated by the one or more traction motors during braking of the vehicle to the capacitor (40) based on a state of health of one or more of the battery, the capacitor, or the fuel cell.

15. The method of claim 14, further comprising directing the electric current generated by the one or more traction motors during braking of the vehicle to one or more of the battery or the capacitor of the vehicle based on a state of charge of the battery or the capacitor.

## Patentansprüche

1. System (70), umfassend:
eine Steuerung (20), die konfiguriert ist, um die Leitung des von einem oder mehreren Traktionsmotoren (10) eines Fahrzeugs (50) erzeugten elektrischen Stroms sowohl zu einem Kondensator (40) als auch zu einer Batterie zu steuern, (30) wobei die Steuerung konfiguriert ist, um die Leitung des erzeugten elektrischen Stroms mindestens teilweise basierend auf einem gemessenen oder geschätzten Wert für eine Rate, eine Menge oder sowohl eine Rate als auch eine Menge zu steuern, mit der der erzeugte elektrische Strom von dem einen oder den mehreren Traktionsmotoren erzeugt wird,
die Steuerung ferner konfiguriert ist, einen ersten Abschnitt des erzeugten elektrischen Stroms zur Batterie und einen zweiten Abschnitt des erzeugten elektrischen Stroms zum Kondensator zu leiten, und zwar basierend auf dem gemessenen oder geschätzten Wert für die Rate, die Menge oder sowohl die Rate als auch die Menge, mit der der erzeugte elektrische Strom von dem einen oder den mehreren Traktionsmotoren erzeugt wird,
**gekennzeichnet durch:**
die Steuerung ist ferner konfiguriert, um die Leitung des erzeugten elektrischen Stroms in den Kondensator anstelle der Batterie zu steuern, und zwar als Reaktion auf die Erkennung eines oder mehrerer Ereignissen des Radschlupfs oder des Radrutschens.

2. System nach Anspruch 1, wobei die Steuerung (20) konfiguriert ist, um während des Bremsens des Fahrzeugs die Ableitung des von dem einen oder den mehreren Traktionsmotoren erzeugten elektrischen Ausgangsstroms in die Batterie (30) und/oder den Kondensator (40) des Fahrzeugs basierend auf dem Zustand einer Brennstoffzelle (50) des Fahrzeugs zu steuern, die ebenfalls den einen oder die mehreren Traktionsmotoren mit Energie versorgt.

3. System nach Anspruch 2, wobei die Steuerung ferner konfiguriert ist, um eine Benachrichtigung bereitzustellen, sobald der Zustand der Batterie (30), des Kondensators (40) oder der Brennstoffzelle (50) einen vorgegebenen Wert erreicht, der eine Angabe zur Leistungsminderung gibt.

4. System nach Anspruch 3, wobei die Steuerung konfiguriert ist, um die Leitung des von dem einen oder den mehreren Traktionsmotoren erzeugten elektrischen Ausgangsstroms während des Bremsens des Fahrzeugs zum Kondensator (40) in Abhängigkeit davon zu steuern, dass der Zustand der Batterie (30) den vorgegebenen Wert erreicht, der eine Angabe zur Leistungsminderung darstellt.

5. System nach Anspruch 1, wobei die Steuerung ferner konfiguriert ist, um die Leitung des erzeugten elektrischen Stroms, der von dem einen oder den mehreren Traktionsmotoren während des Bremsvorgangs des Fahrzeugs erzeugt wird, zu der Batterie (30) oder dem Kondensator (40) des Fahrzeugs oder zu beiden, basierend auf einem Ladezustand der Batterie oder des Kondensators, zu steuern.

6. System nach Anspruch 1, wobei die Steuerung ferner konfiguriert ist, um die Leitung des erzeugten elektrischen Stroms in die Batterie (30) und/oder den Kondensator (40) basierend auf einer prognostizierten Energieerzeugung für einen bevorstehenden Abschnitt einer Fahrt des Fahrzeugs zu steuern.

7. System nach Anspruch 1, wobei die Steuerung ferner konfiguriert ist, um die Leitung des erzeugten elektrischen Stroms in den Kondensator in Reaktion auf die Erfassung des einen oder mehrerer Ereignisse des Radschlupfs oder des Radrutschens und basierend auf einer prognostizierten Energieerzeugung für einen bevorstehenden Abschnitt einer Fahrt des Fahrzeugs zu steuern.

8. System nach Anspruch 1, wobei die Steuerung ferner konfiguriert ist, um die Leitung des erzeugten elektrischen Stroms in die Batterie (30) und/oder den Kondensator (40) basierend auf einem prognostizierten Energiebedarfs für einen bevorstehenden Abschnitt einer Fahrt des Fahrzeugs zu steuern.

9. System nach Anspruch 1, wobei:
die Steuerung konfiguriert ist, um die Leitung des elektrischen Stroms selektiv von der Batterie (30) als erster Energiebaugruppe und dem Kondensator (40) als zweiter Energiebaugruppe des Fahrzeugs zu einem oder mehreren Traktionsmotoren des Fahrzeugs zu steuern, die Steuerung konfiguriert ist, um den elektrischen Strom von der ersten Energiebaugruppe zu dem einen oder den mehreren elektrischen Motoren zu leiten, bevor der elektrische Strom von der zweiten Energiebaugruppe zu dem einen oder den mehreren elektrischen Motoren geleitet wird, und zwar mindestens teilweise als Reaktion darauf, dass der Bedarf des einen oder der mehreren elektrischen Motoren einen Bedarfsschwellenwert überschreitet,
die Steuerung konfiguriert ist, um den elektrischen Strom von der zweiten Energiebaugruppe zu dem einen oder den mehreren Traktionsmotoren zu leiten, bevor der elektrische Strom von der ersten Energiebaugruppe zu dem einen oder den mehreren Traktionsmotoren geleitet wird, und zwar mindestens teilweise als Reaktion auf einen Bedarf des einen oder der mehreren Traktionsmotoren, der den Bedarfsschwellenwert nicht überschreitet, und
die Steuerung konfiguriert ist, um während eines Beschleunigungsereignisses die Zuführung des elektrischen Stroms aus der ersten Energiebaugruppe oder der zweiten Energiebaugruppe zu einem oder mehreren Traktionsmotoren basierend auf einer Aktivierungsgeschwindigkeit einer dritten Energiebaugruppe (50) zu steuern, wobei die Aktivierungsgeschwindigkeit eine Zeitverzögerung angibt, bevor die dritte Energiebaugruppe (50) betriebsbereit ist, um mindestens einen Teil des elektrischen Stroms bereitzustellen.

10. System nach Anspruch 9, wobei die Steuerung konfiguriert ist, um während des Beschleunigungsereignisses die Zuführung des elektrischen Stroms aus einer oder mehreren der ersten Energiebaugruppe (30) oder der zweiten Energiebaugruppe (40) zu dem einen oder den mehreren Traktionsmotoren zu steuern, basierend darauf, dass die Aktivierungsgeschwindigkeit der dritten Energiebaugruppe (50) langsamer ist als die Entladegeschwindigkeiten der Batterie und des Kondensators, wobei die Aktivierungsgeschwindigkeit der dritten Energiebaugruppe die Zeitverzögerung angibt, die verstreicht, bevor die dritte Energiebaugruppe betriebsbereit ist, um mindestens einen Teil des elektrischen Antriebsstroms bereitzustellen.

11. System nach Anspruch 9, wobei die Steuerung konfiguriert ist, um die Leitung des elektrischen Betriebsstroms aus der ersten Energiebaugruppe (30) und/oder der zweiten Energiebaugruppe (40) basierend auf einem prognostizierten Energiebedarf für einen bevorstehenden Abschnitt einer Fahrt des Fahrzeugs zu steuern.

12. System nach Anspruch 9, wobei die Steuerung konfiguriert ist, um eine Leitung des elektrischen Stroms aus der dritten Energiebaugruppe (50) basierend auf einem Energiespeicherzustand der ersten oder der mehreren der zweiten Energiebaugruppe zu steuern.

13. System nach einem der Ansprüche 9 bis 12, wobei die dritte Energiebaugruppe (50) eine Brennstoffzelle ist.

14. Verfahren (300) zum Betreiben des Systems nach einem der Ansprüche 1 bis 12, das Verfahren umfassend:
Bestimmen einer Rate, mit der elektrischer Strom von einem oder mehreren Traktionsmotoren eines Fahrzeugs erzeugt wird oder erzeugt werden wird, die von der Batterie, dem Kondensator und einer Brennstoffzelle gespeist werden; (302) Leiten eines ersten Teils des von dem einen oder den mehreren Traktionsmotoren erzeugten elektrischen Stroms zum Kondensator und Leiten eines zweiten Abschnitts des erzeugten elektrischen Stroms zur Batterie des Fahrzeugs, mindestens teilweise in Abhängigkeit von der bestimmten Rate; (304, 306) und Leiten des von dem einen oder den mehreren Traktionsmotoren während des Bremsens des Fahrzeugs erzeugten elektrischen Stroms zum Kondensator (40) basierend auf dem Zustand der Batterie, des Kondensators oder der Brennstoffzelle.

15. Verfahren nach Anspruch 14, ferner umfassend Leiten des von dem einen oder den mehreren Traktionsmotoren während des Bremsens des Fahrzeugs erzeugten elektrischen Stroms zu der Batterie oder dem Kondensator des Fahrzeugs oder zu beiden, je nach Ladezustand der Batterie oder des Kondensators.

## Revendications

1. Système (70) comprenant :
un dispositif de commande (20) qui est configuré pour commander la conduction d'un courant électrique généré par un ou plusieurs moteurs de traction (10) d'un véhicule (50) à la fois à un condensateur (40) et à une batterie, (30) le dispositif de commande est configuré pour commander la conduction du courant électrique généré sur la base, au moins en partie, d'une valeur mesurée ou estimée pour un taux, une quantité, ou à la fois un taux et une quantité auxquels le courant électrique généré est généré par le ou les moteurs de traction,
le dispositif de commande est en outre configuré pour diriger une première partie du courant électrique généré vers la batterie et une seconde partie du courant électrique généré vers le condensateur sur la base de la valeur mesurée ou estimée pour le taux, la quantité ou à la fois le taux et la quantité auxquels le courant électrique généré est généré par le ou les moteurs de traction,
**caractérisé en ce que :**
le dispositif de commande est en outre configuré pour commander la conduction du courant électrique généré dans le condensateur au lieu de la batterie en réponse à la détection d'un ou plusieurs événements de patinage ou de glissement.

2. Système selon la revendication 1, dans lequel le dispositif de commande (20) est configuré pour commander la conduction du courant électrique généré sortant du ou des moteurs de traction pendant le freinage du véhicule vers une ou plusieurs parmi la batterie (30) ou le condensateur (40) du véhicule sur la base d'un état de santé d'une pile à combustible (50) du véhicule qui alimente également le ou les moteurs de traction.

3. Système selon la revendication 2, dans lequel le dispositif de commande est en outre configuré pour fournir une notification en réponse à l'état de santé d'une ou plusieurs parmi la batterie (30), le condensateur (40) ou la pile à combustible (50) atteignant une valeur prédéterminée indiquant une baisse de performance.

4. Système selon la revendication 3, dans lequel le dispositif de commande est configuré pour commander la conduction du courant électrique généré sortant du ou des moteurs de traction pendant le freinage du véhicule vers le condensateur (40) en réponse à l'état de santé de la batterie (30) atteignant la valeur prédéterminée indiquant une baisse de performance.

5. Système selon la revendication 1, dans lequel le dispositif de commande est en outre configuré pour commander la conduction du courant électrique généré qui est généré par le ou les moteurs de traction pendant le freinage du véhicule vers une ou plusieurs parmi la batterie (30) ou le condensateur (40) du véhicule sur la base d'un état de charge de la batterie ou du condensateur.

6. Système selon la revendication 1, dans lequel le dispositif de commande est en outre configuré pour commander la conduction du courant électrique généré dans un ou plusieurs parmi la batterie (30) ou le condensateur (40) sur la base d'une création d'énergie prévue pour une partie à venir d'un trajet du véhicule.

7. Système selon la revendication 1, dans lequel le dispositif de commande est en outre configuré pour commander la conduction du courant électrique généré dans le condensateur en réponse à la détection du ou des événements de patinage ou de glissement et sur la base d'une création d'énergie prévue pour une partie à venir d'un trajet du véhicule.

8. Système selon la revendication 1, dans lequel le dispositif de commande est en outre configuré pour commander la conduction du courant électrique généré dans une ou plusieurs des batteries (30) ou du condensateur (40) sur la base d'une demande d'énergie prévue pour une partie à venir d'un trajet du véhicule.

9. Système selon la revendication 1, dans lequel :
le dispositif de commande est configuré pour commander la conduction du courant électrique d'alimentation sélectivement à partir de la batterie (30) en tant qu'un premier ensemble d'énergie et du condensateur (40) en tant qu'un deuxième ensemble d'énergie du véhicule vers un ou plusieurs moteurs de traction du véhicule, le dispositif de commande étant configuré pour diriger le courant électrique d'alimentation vers le ou les moteurs de traction à partir du premier ensemble d'énergie avant de diriger le courant électrique d'alimentation vers le ou les des moteurs de traction du deuxième ensemble d'énergie en réponse au moins en partie à une demande du ou des moteurs de traction dépassant un seuil de demande,
le dispositif de commande est configuré pour diriger le courant électrique d'alimentation vers le ou les moteurs de traction à partir du deuxième ensemble d'énergie avant de diriger le courant électrique d'alimentation vers le ou les moteurs de traction à partir du premier ensemble d'énergie en réponse au moins en partie à une demande du ou des moteurs de traction ne dépassant pas le seuil de demande, et
le dispositif de commande est configuré pour commander la conduction du courant électrique d'alimentation provenant d'un ou de plusieurs du premier ensemble d'énergie ou du deuxième ensemble d'énergie vers le ou les moteurs de traction pendant un événement d'accélération sur la base d'une vitesse d'activation d'un troisième ensemble d'énergie (50), la vitesse d'activation indiquant un délai avant que le troisième ensemble d'énergie (50) ne soit fonctionnel pour fournir au moins une partie du courant électrique d'alimentation.

10. Système selon la revendication 9, dans lequel le dispositif de commande est configuré pour commander la conduction du courant électrique d'alimentation d'un ou de plusieurs du premier ensemble d'énergie (30) ou du deuxième ensemble d'énergie (40) vers le ou les moteurs de traction pendant l'événement d'accélération sur la base de la vitesse d'activation du troisième ensemble d'énergie (50) étant plus lente que les vitesses de décharge de la batterie et du condensateur, la vitesse d'activation du troisième ensemble d'énergie indiquant le délai avant que le troisième ensemble d'énergie ne soit fonctionnel pour fournir au moins une partie du courant électrique d'alimentation.

11. Système selon la revendication 9, dans lequel le dispositif de commande est configuré pour commander la conduction du courant électrique d'alimentation provenant d'un ou de plusieurs du premier ensemble d'énergie (30) ou du deuxième ensemble d'énergie (40) sur la base d'une demande d'énergie prévue pour une partie à venir d'un trajet du véhicule.

12. Système selon la revendication 9, dans lequel le dispositif de commande est configuré pour commander la conduction du courant électrique d'alimentation du troisième ensemble d'énergie (50) sur la base d'un état de stockage d'énergie d'un ou de plusieurs du premier ensemble d'énergie ou du deuxième ensemble d'énergie.

13. Système selon l'une quelconque des revendications 9 à 12, dans lequel le troisième ensemble d'énergie (50) est une pile à combustible.

14. Procédé (300) de fonctionnement du système selon l'une quelconque des revendications 1 à 12, le procédé comprenant :
la détermination d'une vitesse à laquelle un courant électrique est ou sera généré par un ou plusieurs moteurs de traction d'un véhicule qui sont alimentés par la batterie, le condensateur et une pile à combustible ; (302) la direction d'une première partie du courant électrique généré par le ou les moteurs de traction vers le condensateur et la direction d'une seconde partie du courant électrique généré vers la batterie du véhicule en réponse au moins en partie au taux déterminé ; (304, 306) et le fait de diriger le courant électrique généré par le ou les moteurs de traction pendant le freinage du véhicule vers le condensateur (40) sur la base d'un état de santé d'un ou plusieurs parmi la batterie, le condensateur ou la pile à combustible.

15. Procédé selon la revendication 14, comprenant en outre le fait de diriger le courant électrique généré par le ou les moteurs de traction pendant le freinage du véhicule vers un ou plusieurs parmi la batterie ou le condensateur du véhicule sur la base d'un état de charge de la batterie ou du condensateur.
